# EUROPEAN PATENT SPECIFICATION

(11) **EP 2 391 844 B1**
(45) Date of publication and mention of the grant of the patent: **03.04.2013**
(21) Application number: 10702813.6
(22) Date of filing: 26.01.2010
(51) Int. Cl.: F16K 31/40

(54) **A SERVO VALVE**
SERVOVENTIL
SERVODISTRIBUTEUR

(30) Priority: 30.01.2009 DK 200900144
(43) Date of publication of application: 07.12.2011
(73) Proprietor: Danfoss A/S, 6430 Nordborg (DK)
(72) Inventor: CHRISTENSEN, Ole, Holst, DK-6000 Kolding (DK); PARASTAR, Behzad, DK-6000 Kolding (DK)
(86) International application number: PCT/DK2010/000013
(87) International publication number: WO 2010/085952

(56) References cited:
- DE-A1- 10 254 342
- DE-A1-102006 029 094
- JP-A- 2001 263 527

## Description

### INTRODUCTION

The present invention relates to a servo valve for opening and closing a passage between a fluid inlet and a fluid outlet. In particular, the invention relates to a valve comprising a valve body with a valve inlet and a valve outlet and a main piston mounted for reciprocal movement in said valve body between an open position allowing fluid flow through said valve body from said valve inlet to said valve outlet and a closed position blocking fluid flow between said valve inlet and said valve outlet, said main piston forming a pilot nozzle providing fluid communication between a servo chamber and said valve outlet. The valve further comprises a servo piston movable relative to the pilot nozzle between an open position allowing fluid flow through said pilot nozzle and a closed position blocking fluid flow through the pilot nozzle; a solenoid including an armature top forming part of an electromagnet and an armature movable in a passage responsive to a magnetic field from said electromagnet and connected to said servo piston for movement therewith. The valve further comprises a conduit providing continuous fluid communication between the servo chamber and said valve inlet with a larger flow resistance than that resistance provided by the pilot nozzle between a servo chamber and said valve outlet.

### BACKGROUND .

In general, servo valves for pressure systems exist in which a piston, under influence of a pressure difference between an inlet or an outlet and a servo chamber, is movable between a closed and an open position. Due to use of the pressure difference, such valves are operable by way of relatively simple actuators having a low power consumption and weight, e.g. via a solenoid. The actuator may e.g. move a servo piston which opens or closes a fluid passage between the inlet or outlet and the servo chamber. DE 1077 496 discloses such a valve.

A high pressure difference may require a comparably powerful solenoid and the strong forces thereby acting in the system may require frequent replacement of warn out valve components

In some valves, internal clogging may occur and regular cleaning may become necessary.

US 6,021,997 illustrates a proportional power control valve with an armature where pressure is equalized on the top of the armature through a central bore in the armature. In this case, the main piston is not lifted by the armature but only by a pressure difference across the main piston.

DE 2909768 C2 illustrates a magnet valve with pressure equalizing over the armature and the piston is lifted only by the pressure difference.

JP 2001 263 527 A shows a servo valve according to the preamble of claim 1; DE 10 2006 029094 an armature according to the preamble of claim 6.

### DESCRIPTION OF THE INVENTION

It is an object of the invention to provide an electromagnetic servo valve for high pressure difference systems and to provide a valve which can be operated with simple actuation means, to reduce forces acting in the valve, to reduce wear on valve parts and thereby to potentially increase the expected lifetime of the valve and to simplify manufacturing and cleaning of the valve.

Accordingly, the invention provides a valve wherein the servo chamber is provided inside the armature. By placing the servo chamber inside the armature it is possible to isolate the servo chamber from pressure which may be present in the inlet and the valve may be balanced with comparably low forces so that a comparably smaller solenoid can be used for operating the valve.

The valve body including the valve inlet and valve outlet may generally correspond to that of servo valves known per se. The body could be made in one piece.

The main piston could be held only by the armature, and the reciprocal movement in the valve body could be obtained by movement of the armature including the main piston up and down in the valve body, and/or it could be obtained by reciprocal movement of the main piston inside the servo chamber in the armature.

The servo piston could be fixed to the armature or it could be formed in one part with the armature so that it follows the movement of the armature.

Since the main piston and servo piston are attached to the armature, the number of separate components is reduced and the valve becomes easy to assemble and disassemble e.g. for maintenance.

The conduit, which provides continuous fluid communication between the servo chamber and the valve inlet, may comprise at least two flow sections providing different flow resistances.

The armature comprises a central bore forming part of the conduit so that the inlet pressure influences the pressure in the servo chamber partly through this bore.

That end of the armature facing away from the main piston will in the following be referred to as the "top end" of the armature whereas the end facing towards the main piston is referred to as the "lower end" of the armature.

The conduit may e.g. extend from the inlet towards the top end, and from end, the conduit may change direction and extend through the central bore in the armature to the servo chamber.

A top portion of the armature may form a tap with a cross section being smaller than that of the remaining part of the armature. The tap may e.g. form a wall which extends circumferentially around the opening into the central bore through the armature.

The tap may be received in a cavity, e.g. a bore hole, in a top armature which forms the termination of the tube in which the armature moves. The flow resistance in the conduit may be controlled by the size of the gab between the surface of the cavity and the outer surface of the tab. In one embodiment, the flow resistance between the tap and cavity is larger than that though the remaining part of the conduit.

The servo chamber may be located in the lower end of the armature e.g. directly adjacent the main piston.

In one embodiment, the servo chamber is formed by a cavity into the lower end of the armature, and the main piston forms a wall of servo chamber and thereby at least partly closes the cavity. The main piston may e.g. be movable reciprocally in the cavity so that the volume of the servo chamber depends on the position of the main piston in the cavity. To prevent removal of the main piston from the cavity, the cavity may, at the lower end of the armature, terminate in a flange or similar structure which makes the cross section of the opening into the cavity smaller than the cross section of the cavity as such and smaller than the cross section of the main piston whereby the main piston can move back and fourth in the cavity without being able to escape the cavity.

The valve may further comprise a spring structure arranged to provide a spring force on the armature and servo piston in a direction away from the armature top.

In a second aspect, the invention provides an armature for controlling a fluid flow in a servo valve, the armature comprising a body forming an internal space in fluid communication with a top opening in a top end of the body and an lower opening in a lower end of the body;
- a servo piston fixed to the body; and
- a main piston arranged in the space and forming a pilot nozzle providing fluid communication between the top opening and lower opening,
wherein the main piston is movable in the space between an closed position in which the servo piston blocks passage through the pilot nozzle and an open position in which fluid flow through said pilot nozzle is facilitated.

The main piston may be irremovable from the internal space, e.g. by having at the lower opening, a flange which prevents passage of the main piston out of the internal space.

The body and servo piston are formed in one part.

### DETAILED DESCRIPTION

Embodiments of the invention will in the following be explained in further details with reference to the drawings in which:
Fig. 1 illustrates a valve according to the invention in a closed state;
Fig. 2 illustrates the valve in a closed state with the pilot nozzle being open; and
Fig. 3 illustrates the valve in an open state.

The valve 1 comprises a valve body 2 with a valve inlet 3 and a valve outlet 4. A main piston 5 is arranged so that it can move in a reciprocal movement in said valve body. The main piston 5 forms a pilot nozzle 6 which provides fluid communication between a servo chamber 7 and the valve outlet 4. The valve further comprises a solenoid including an armature top 8 forming part of an electromagnet comprising the armature top 8 which is of a magnetically conductive material and which is arranged to form a closure of a tube 9 within a coil 10. An armature 11 is movable in a passage 12 inside the tube 9. The armature 11 is formed in one part with a servo piston 13 which is movable between an open position allowing a flow through the pilot nozzle 6 and a closed position wherein it blocks passage through the pilot nozzle 6. Since the servo piston 13 is formed in one part with the armature 11, it moves upwardly with the armature 11 under influence of a magnetic field from the electromagnet when the magnet is turned on, and it moves downwardly with the armature 11 under influence of a spring force from the spring 14 when the electromagnet is switched off.

The servo chamber 7 is located internally inside the armature 11, and the armature 11 comprises a bore 15 which forms part of a conduit providing continuous fluid communication between the servo chamber and the valve inlet 3. The conduit is further defined by a space between the outer surface of the armature 11 and the inner surface of the tube 9. The cross section of at least a part of the conduit is smaller than the cross section of the pilot nozzle 6, and the conduit therefore provides a larger flow resistance than that resistance which is provided by the pilot nozzle 6 between a servo chamber 7 and the valve outlet 4.

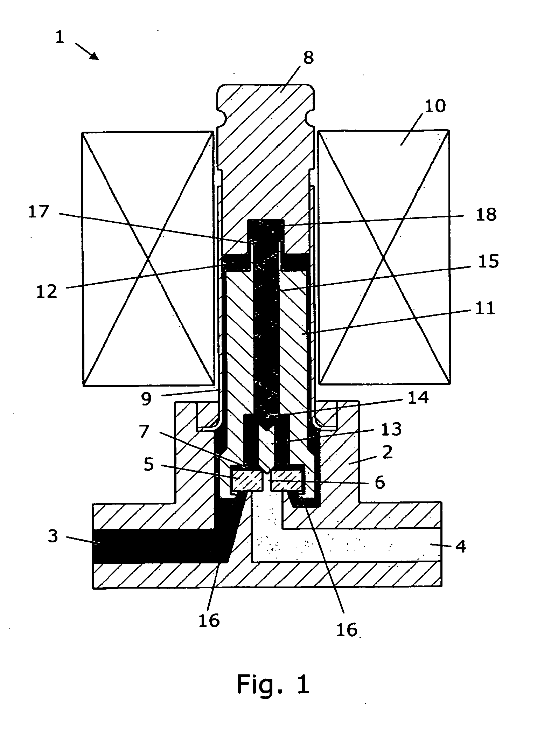

In Fig. 1, the valve is illustrated with the main piston 5 in a closed position thereby blocking fluid flow between the valve inlet 3 and the valve outlet 4. The servo piston 13 is also in the closed position in which it prevents a fluid flow through the pilot nozzle 6.

The main piston 5 is movable inside the servo chamber 7. A flange 16 prevents the main piston 5 from moving out of the servo chamber 7, and the main piston 5 is therefore fixed to the armature 11.

The armature 11 comprises a ring formed tap 17 forming a top of the armature 11. The ring formed tap 17 fits into a cavity 18 in the armature top 8. Due to the small distance between the inner surface of the cavity 18 and the outer surface of the tap 17, the tab 17 forms a barrier which slows down progress of pressure from the inlet into the servo chamber 7.

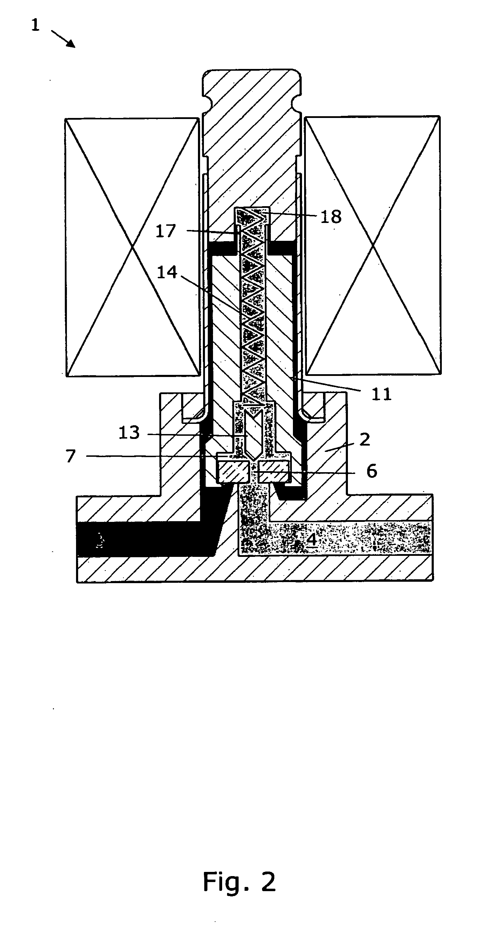

In Fig. 2 the valve is illustrated in a state where the solenoid is switched on whereby the armature 11 is lifted whereby the servo piston 13 moves to the open position. In this state, the pilot nozzle 6 provides fluid communication between the outlet 4 and the servo chamber 7. Since the fluid communication between the outlet 4 and the servo chamber 7 provides less flow resistance than that provided by the conduit between the inlet 3 and the servo chamber - in particular due to the narrow passage between the ring formed tap 17 and the cavity 18, the pressure of the servo chamber is reduced compared to the pressure at the inlet 3.

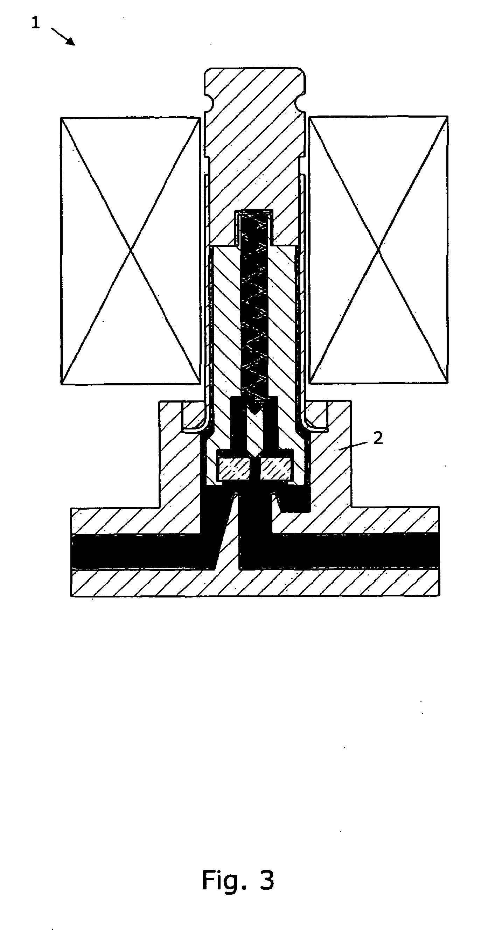

Due to the pressure difference between the pressure at the inlet 3 and the pressure in the servo chamber 7, the main piston 5 is lifted from the seat, c.f. fig. 3, and the inlet 3 is now in flow communication with the outlet 4.

For closing the valve, the solenoid is switched off, and the spring 14 moves the armature 11, and thereby also the servo piston 13 and the main piston 5 downwards.

## Claims

1. A servo valve comprising:
- a valve body (2) with a valve inlet (3) and a valve outlet (4);
- a main piston (5) mounted for reciprocal movement in said valve body (2) between an open position allowing fluid flow through said valve body (2) from said valve inlet (3) to said valve outlet (4) and a closed position blocking fluid flow between said valve inlet and said valve outlet, said main piston (5) forming a pilot nozzle (6) providing fluid communication between a servo chamber (7) and said valve outlet (4);
- a servo piston (13) movable relative to the pilot nozzle (6) between an open position allowing fluid flow through said pilot nozzle (6) and a closed position blocking fluid flow through said pilot nozzle (6);
- a solenoid (10) including an armature top (8) forming part of an electromagnet and an armature (11) movable in a passage responsive to a magnetic field from said electromagnet and connected to said servo piston (13) for movement therewith; and
- a conduit providing continuous fluid communication between the servo chamber (7) and said valve inlet (3) with a larger flow resistance than that resistance provided by the pilot nozzle (6) between a servo chamber (7) and said valve outlet (4);
**characterised in that**
the servo chamber (7) is provided inside the armature (11) and wherein the armature (11) comprises a central bore forming part of the conduit.

2. A valve according to claim 1, wherein the armature (11) comprises a top portion (8) fitting into a cavity in the armature top.

3. A valve according to claim 2, wherein the top portion forms a barrier slowing down progress of pressure from the inlet (3) to the servo chamber (7).

4. A valve according to claim 3, wherein the main piston (5) is movably fixed inside the armature (11).

5. A valve according to any of the preceding claims, further comprising a spring structure (14) arranged to provide a spring force on said armature (11) and servo piston (13) in a direction away from said armature top (8).

6. An armature (11) for controlling a fluid flow in a servo valve, the armature (11) comprising a body forming an internal space in fluid communication with a top opening in a top end of the body and an lower opening in a lower end of the body;
- a servo piston (13) fixed to the body; and
- a main piston (5) arranged in the internal space and forming a pilot nozzle (6) providing fluid communication between the top opening and lower opening
**characterized in that**
the main piston (5) is movable in the internal space between an closed position in which the servo piston (13) blocks passage through the pilot nozzle (6) and an open position in which fluid flow through said pilot nozzle (6) is facilitated and wherein the servo piston (13) is formed in one part with the body.

7. An armature according to claim 6, wherein the main piston (5) is irremovable from the internal space.

## Patentansprüche

1. Ein Servoventil mit:
- einem Ventilkörper (2) mit einem Ventileinlass (3) und einem Ventilauslass (4);
- einem Hauptkolben (5) zur hin- und hergehenden Bewegung im Ventilkörper (2) zwischen einer offenen Stellung, bei der Flüssigkeit durch den Ventilkörper (2) vom Ventileinlass (3) zum Ventilauslass (4) fließen kann, und einer geschlossenen Stellung, bei der der Flüssigkeitsdurchfluss zwischen dem Ventileinlass und dem Ventilauslass blockiert ist, wobei der Hauptkolben eine Servodüse (6) zur Flüssigkeitskommunikation zwischen einer Servokammer (7) und dem Ventilauslass (4) bildet;
- einem relativ zur Servodüse (6) zwischen einer offenen Stellung, bei der Flüssigkeit durch die Servodüse fließen kann, und einer geschlossenen Stellung, bei der der Flüssigkeitsdurchfluss durch die Servodüse (6) blockiert ist, beweglichen Servokolben (13);
- einem Solenoid (10) mit einem oberen Ankerende (8), der Teil eines Elektromagneten bildet, und einem Anker (11), der als Antwort auf ein magnetisches Feld vom Elektromagneten in einer Passage bewegbar ist und mit dem Servokolben (13) zur Bewegung damit verbunden ist; und
- ein Rohr, das eine ständige Flüssigkeitskommunikation zwischen der Servokammer (7) und dem Ventileinlass (3) vorsieht, und zwar mit einem größeren Durchflusswiderstand als der Widerstand, der von der Servodüse (6) zwischen einer Servokammer(7) und dem Ventilauslass (4) geleistet wird;
**dadurch gekennzeichnet, dass** die Servokammer (7) innerhalb des Ankers (11) vorgesehen ist und der Anker (11) eine zentrale Bohrung aufweist, die einen Teil des Rohres bildet.

2. Ein Ventil nach Anspruch 1, **dadurch gekennzeichnet, dass** der Anker (11) einen oberen Teil (8) aufweist, der in einen Hohlraum am oberen Ankerende hinein passt.

3. Ein Ventil nach Anspruch 2, **dadurch gekennzeichnet**, das der obere Teil eine Sperre bildet, die das Fortschreiten von Druck vom Einlass (3) zur Servokammer (7) verlangsamt.

4. Ein Ventil nach Anspruch 3, **dadurch gekennzeichnet, dass** der Hauptkolben (5) im Anker (11) beweglich befestigt ist.

5. Ein Ventil nach jedem der vorhergehenden Ansprüche, das zusätzlich eine Federstruktur (14) aufweist, die zur Erzeugung einer Federkraft auf den Anker (11) und dem Servokolben (13) in eine Richtung weg von dem oberen Ankerende (8) vorgesehen ist.

6. Ein Anker (11) zur Regelung eines Flüssigkeitsdurchflusses in einem Servoventil, wobei der Anker (11) einen Körper aufweist, der einen inneren Raum in Flüssigkeitskommunikation mit einer oberen Öffnung an einem oberen Ende des Körpers und einer unteren Öffnung an einem unteren Ende des Körpers bildet;
- einen am Körper befestigten Servokolben (13); und
- einen Hauptkolben (5), der im inneren Raum angeordnet ist und eine Servodüse (6) bildet, die eine Flüssigkeitskommunikation zwischen der oberen Öffnung und der unteren Öffnung vorsieht,
**dadurch gekennzeichnet, dass** der Hauptkolben (5) im inneren Raum bewegbar ist, zwischen einer geschlossenen Stellung, bei der der Servokolben (13) eine Passage durch die Servodüse (6) blockiert und einer offenen Stellung, bei der der Flüssigkeitsdurchfluss durch die Servodüse (6) ermöglicht wird und wobei der Servokolben (13) einstückig mit dem Körper ausgebildet ist.

7. Ein Anker nach Anspruch 6, **dadurch gekennzeichnet, dass** der Hauptkolben (5) nicht aus dem inneren Raum entfernt werden kann.

## Revendications

1. Servo-soupape, comprenant :
- un corps de soupape (2) avec une entrée de soupape (3) et une sortie de soupape (4) ;
- un piston principal (5) monté pour un mouvement en va-et-vient dans ledit corps de soupape (2) entre une position ouverte permettant l'écoulement fluidique à travers ledit corps de soupape (2) de ladite entrée de soupape (3) à ladite sortie de soupape (4) et une position fermée bloquant l'écoulement fluidique entre ladite entrée de soupape et ladite sortie de soupape, ledit piston principal (5) formant une buse pilote (6) fournissant une communication fluidique entre une servo-chambre (7) et ladite sortie de soupape ;
- un servo-piston (13) mobile par rapport à la buse pilote (6) entre une position ouverte permettant l'écoulement fluidique à travers ladite buse pilote (6) et une position fermée bloquant l'écoulement fluidique à travers ladite buse pilote (6) ;
- un solénoïde (10) comprenant une partie supérieure d'induit (8) faisant partie d'un électroaimant et un induit (11) mobile dans un passage en réponse à un champ magnétique à partir dudit électroaimant et connecté audit servo-piston (13) pour le mouvement avec celui-ci ; et
- un conduit fournissant une communication fluidique continue entre la servo-chambre (7) et ladite entrée de soupape (3) avec une résistance à l'écoulement plus importante que la résistance fournie par la buse pilote (6) entre une servo-chambre (7) et ladite sortie de soupape (4) ;
**caractérisée en ce que** la servo-chambre (7) est prévue à l'intérieur de l'induit (11) et dans laquelle l'induit (11) comprend un alésage central faisant partie du conduit.

2. Soupape selon la revendication 1, dans laquelle l'induit (11) comprend une partie supérieure (8) allant dans une cavité dans la partie supérieure d'induit.

3. Soupape selon la revendication 2, dans laquelle la partie supérieure forme une barrière ralentissant le progrès de pression de l'entrée (3) à la servo-chambre (7).

4. Soupape selon la revendication 3, dans laquelle le piston principal (5) est fixé de façon mobile à l'intérieur de l'induit (11).

5. Soupape selon une quelconque des revendications précédentes, comprenant en outre une structure (14) agencée pour fournir une force de ressort sur ledit induit (11) et ledit servo-piston (13) dans une direction s'éloignant de ladite partie supérieure d'induit (8).

6. Induit (11) pour commander un écoulement fluidique dans une servo-soupape, l'induit (11) comprenant un corps formant un espace interne en communication fluidique avec une ouverture supérieure dans une extrémité supérieure du corps et une ouverture inférieure dans une extrémité inférieure du corps ;
- un servo-piston (13) fixé au corps ; et
- un piston principal (5) agencé dans l'espace interne et formant une buse pilote (6) fournissant une communication fluidique entre l'ouverture supérieure et l'ouverture inférieure,
**caractérisée en ce que** le piston principal (5) est mobile dans l'espace interne entre une position fermée dans laquelle le servo-piston (13) bloque le passage à travers la buse pilote (6) et une position ouverte dans laquelle l'écoulement fluidique à travers ladite buse pilote (6) est facilité, et dans lequel le servo-piston (13) est formé de façon monobloc avec le corps.

7. Induit selon la revendication 6, dans lequel le piston principal (5) est inamovible de l'espace interne.
